# FASCICULE DE BREVET EUROPEEN

(11) **EP 2 594 894 B1**
(45) Date de publication et mention de la délivrance du brevet: **09.10.2019**
(21) Numéro de dépôt: 12193228.9
(22) Date de dépôt: 19.11.2012
(51) Int. Cl.: G01B 5/008, B25J 9/16, G01B 21/04

(54) **Procédé de commande d'un appareil de mesure**
Verfahren zur Steuerung eines Messgeräts
Method for controlling a measurement apparatus

(30) Priorité: 18.11.2011 FR 1160551
(43) Date de publication de la demande: 22.05.2013
(73) Titulaire: Hexagon Metrology SAS, 91978 Courtaboeuf Cedex (FR)
(72) Inventeur: Desforges, Laurent, 41310 Ambloy (FR); Delemos, Jean-Paul, 37110 Montodon (FR)
(74) Mandataire: Lavialle, Bruno François Stéphane

(56) Documents cités:
- US-A- 6 131 299
- US-A1- 2011 107 611
- US-A1- 2011 173 823

## Description

La présente invention concerne un procédé de commande d'un appareil de mesure.

Un appareil de mesure est décrit par le document brevet US2011/107611. Un appareil de mesure comprend généralement une unité de traitement reliée à des moyens de repérage positionnel d'une extrémité de pointage d'un bras de mesure. L'extrémité de pointage est directement manipulée par un opérateur et est équipée d'un palpeur que l'opérateur doit appliquer successivement en différents endroits contre la surface de la pièce à mesurer ou d'un émetteur/récepteur de faisceau laser que l'opérateur doit diriger vers la surface de la pièce à mesurer.

L'unité de traitement est constituée d'une unité informatique centrale à laquelle sont connectés un écran, un clavier et un organe de sélection de zone de l'écran comme une souris. Le bras de mesure a une extrémité fixe et, à l'opposé, l'extrémité mobile de pointage et comporte entre lesdites extrémités une pluralité de segments mobiles les uns par rapport aux autres. Les moyens de repérage positionnel comprennent par exemple des détecteurs de la position relative des différents segments les uns par rapport aux autres. En fonctionnement, l'opérateur en charge de l'appareil de mesure manipule l'extrémité de pointage qu'il applique, lorsque ladite extrémité de pointage est équipée d'un palpeur, contre la surface de la pièce à mesurer ou qu'il dirige, lorsque ladite extrémité de pointage est équipée d'un émetteur/récepteur de faisceau laser, vers la surface de la pièce à mesurer.

Les moyens de repérage positionnel et éventuellement l'émetteur/récepteur de faisceau laser communiquent à l'unité de traitement des données positionnelles qui sont traitées et enregistrées par l'unité de traitement. L'unité de traitement peut afficher les mesures réalisées et/ ou une représentation de la pièce en cours de mesure pour guider l'opérateur et lui permettre par exemple de détecter une erreur.

L'opérateur doit, lorsqu'il procède à des mesures, se rendre périodiquement auprès de l'unité de traitement pour débuter ou arrêter une session de mesure, modifier une configuration ou un paramétrage de l'appareil de mesure, effacer des données de mesure entrées préalablement... Il en résulte une contrainte pour l'opérateur car l'unité de traitement est le plus souvent éloignée du bras de mesure afin de ne pas gêner la mise en place ou l'évacuation des pièces à mesurer ni les évolutions de l'opérateur et/ou du bras autour desdites pièces.

Un but de l'invention est de fournir un procédé pour faciliter la commande de l'unité de traitement d'un tel appareil de mesure.

A cet effet, on prévoit, selon l'invention, un procédé de commande d'un appareil de mesure comportant une unité de traitement de données reliée à des moyens de repérage positionnel d'une extrémité de pointage d'un bras de mesure, l'unité de traitement étant agencée pour traiter des données positionnelles en provenance des moyens de repérage positionnel. Le procédé comprend les étapes de :
- associer, dans une mémoire de l'unité de traitement, une instruction exécutable par l'unité de traitement et un déplacement prédéterminé de l'extrémité de pointage,
- vérifier une présence du déplacement prédéterminé dans les données positionnelles provenant des moyens de repérage positionnel,
- faire exécuter l'instruction par l'unité de traitement lorsque le déplacement prédéterminé de l'extrémité de pointage est détecté dans les données positionnelles,

l'extrémité de pointage comportant une poignée de manipulation et l'unité de traitement comportant en outre un écran et des moyens d'information autres que l'écran, ces moyens d'information étant agencés pour transmettre une information à un opérateur de l'appareil de mesure tenant dans une main une poignée de manipulation, le procédé de commande comprenant l'enregistrement d'une position initiale de l'extrémité de pointage à réception d'une instruction d'enregistrement donnée par l'utilisateur, les moyens d'information étant en outre agencés pour transmettre à l'opérateur un premier signal l'informant qu'une position initiale de l'extrémité de pointage a été enregistrée, ladite vérification de présence du déplacement étant réalisée en observant le déplacement de l'extrémité de pointage depuis cette position initiale enregistrée.

Ainsi, le bras de mesure devient un organe d'entrée d'instructions dans l'unité de traitement. L'opérateur peut donc commander l'unité de traitement simplement en imprimant des déplacements prédéfinis à l'extrémité de pointage sans devoir se rendre auprès de l'unité de traitement.

D'autres caractéristiques et avantages de l'invention ressortiront à la lecture de la description qui suit d'un mode de réalisation particulier non limitatif de l'invention. Le champ de l'invention est défini dans les revendications 1 à 12.

Il sera fait référence aux dessins annexés, parmi lesquels :
- la figure 1 est une vue schématique d'un appareil de mesure utilisé dans un procédé selon l'invention ;
- la figure 2 est une vue de détail illustrant le choix d'une option dans un menu affiché sur un écran de l'appareil de mesure.

En référence aux figures, l'appareil de mesure non revendiqué mais utilisé dans le procédé selon l'invention comprend un bras de mesure généralement désigné en 1, connu en lui-même, comportant une embase 2 de fixation à un support et une pluralité de segments 3 qui sont assemblés deux à deux de telle manière qu'ils soient mobiles les uns par rapport aux autres. L'embase 2 et les segments 3 sont ici reliés par des articulations autorisant au moins un degré de liberté relatif en rotation. Le bras de mesure 1 comprend une extrémité libre ou extrémité de pointage 4 équipée d'une poignée de manipulation 5 et équipée ici d'un palpeur 6. En variante, l'extrémité de pointage 4 peut être équipée d'un émetteur/récepteur de faisceau laser. Le bras de mesure 1 comprend des moyens de repérage positionnel de l'extrémité de pointage 4. Les moyens de repérage positionnel sont connus en eux-mêmes et comprennent ici des détecteurs de la position angulaire relative de l'embase 2 et des différents segments 3a, 3b, 3c, 3d, 3e les uns par rapport aux autres. Plus précisément, ces segments de bras 3a, 3b, 3c, 3d sont articulés les uns par rapport aux autres par des articulations X, X', A, B, C. L'embase 2 est articulée à un premier de ces segments 3a par une première articulation Z, et l'extrémité de pointage 4 est articulée à une première extrémité d'un dernier de ces segments 3e par une dernière articulation D. Chacune de ces articulations est en fait une liaison pivot non glissant.

Les moyens de repérage positionnel comprennent :
- un premier des détecteurs 13a détectant la position angulaire relative de l'embase 2 par rapport audit premier segment 3a ;
- un dernier des détecteurs 13g détectant la position angulaire relative de l'extrémité de pointage 4 par rapport audit dernier segment 3e auquel il est articulé ; et
- certains autres des détecteurs de position angulaire formant des détecteurs dits intermédiaires 13b, 13c, 13d, 13e, 13f.

Chacun de ces détecteurs intermédiaires 13b, 13c, 13d, 13e, 13f étant associé à deux segments articulés 3a, 3b, 3c, 3d l'un par rapport à l'autre et correspondants à ce détecteur intermédiaire de manière à mesurer une position angulaire relative des deux segments auxquels il est associé.

Les données positionnelles sont ainsi déterminées en fonction d'au moins trois des positions angulaires relatives mesurées par lesdits détecteurs de position angulaire. Préférentiellement, le déplacement prédéterminé de l'extrémité de pointage 4 est exprimé en fonction de données positionnelles provenant de tous les détecteurs de position angulaire 13a, 13b, 13c, 13d, 13e, 13f, 13g de l'appareil de mesure.

Les moyens de repérage positionnel sont reliés à une unité de traitement généralement désignée en 7. L'unité de traitement 7 est ici un ordinateur portable comportant une unité centrale 8 et un écran 9, ainsi qu'un clavier 10 et des moyens de sélection d'une zone de l'écran 9 tel qu'une surface tactile 11. L'unité centrale 8 comprend de manière connue en elle-même un processeur et des mémoires. L'unité centrale 8 de l'unité de traitement 7 exécute un programme informatique agencé pour traiter des données positionnelles en provenance des moyens de repérage positionnel de manière à mémoriser les données positionnelles en question et pour reconstituer à l'échelle la pièce en cours de mesure. Outre l'écran 9, l'unité de traitement 7 comporte des moyens d'information Lum, V, Sn autres que l'écran 9, qui sont agencés pour transmettre une information à un opérateur de l'appareil de mesure tenant dans une main une poignée de manipulation 5 appartenant à l'extrémité de pointage 4. On note que tout ou partie des moyens d'information peuvent être montés sur le bras, par exemple au niveau de l'extrémité de pointage 4, ou peuvent être montés au niveau de l'unité de traitement 7 ou à tout autre endroit compatible avec une information de l'opérateur manipulant l'extrémité de pointage 4.

Ces caractéristiques améliorent l'interface homme machine de telle manière que l'opérateur peut recevoir des informations de la machine sans avoir à regarder l'écran.

Ces moyens d'information comportent au moins l'un des moyens d'information appartenant au groupe comprenant :
- un générateur de vibrations V préférentiellement adapté à générer des vibrations au niveau de la poignée 5 ;
- un générateur de signaux lumineux Lum tel qu'une lampe à éclat ou une lampe de couleur comme le vert ou le rouge, ce générateur pouvant être disposée sur l'extrémité de pointage 4 pour être visible par l'opérateur la manipulant ;
- un générateur de signaux sonores Sn, par exemple adapté à émettre un message vocal comprenant des paroles informatives.

En fonctionnement, l'opérateur ouvre une session de mesure sur l'unité de traitement 7 puis manipule l'extrémité de pointage 4 directement au moyen de la poignée 5 pour appliquer le palpeur 6 successivement en différents endroits contre la surface de la pièce à mesurer. Les données positionnelles sont transmises en continu à l'unité de traitement 7 et la poignée 5 est pourvue d'un bouton de commande permettant à l'opérateur de commander l'acquisition des données positionnelles courantes issues des moyens de repérage positionnel. Les données positionnelles acquises sont ensuite traitées par l'unité de traitement 7 pour la reconstitution de la pièce en cours de mesure.

Conformément à l'invention, des déplacements prédéterminés de l'extrémité de pointage 4 et des instructions exécutables par l'unité de traitement 7 sont associés les uns aux autres dans une mémoire de l'unité de traitement 7.

Lorsque l'un des déplacements prédéterminés de l'extrémité de pointage 4 est détecté dans les données positionnelles transmises en continu à l'unité de traitement 7, l'unité de traitement 7 exécute la ou les instructions correspondantes.

Les instructions peuvent être :
- l'ouverture d'une session de mesure,
- la fermeture d'une session de mesure,
- l'effacement de données positionnelles antérieurement acquises,
- la modification de paramètres d'affichage,
- l'affichage d'un champ de saisie...

Selon l'invention, le déplacement de la l'extrémité de pointage 4 est évalué à partir d'une position initiale enregistrée à réception d'une commande spécifique prédéterminée donnée par l'utilisateur.

Toujours selon l'invention, les moyens d'information Lum, V, Sn sont agencés pour transmettre à l'opérateur un premier signal l'informant que la position initiale de l'extrémité de pointage 4 a été enregistrée, ladite vérification de présence du déplacement étant réalisée en observant le déplacement de l'extrémité de pointage 4 depuis cette position initiale enregistrée.

L'enregistrement de la position initiale est exécuté si une instruction d'enregistrement est donnée par l'utilisateur, cette instruction peut être donnée :
- via un appui sur un dispositif de détection d'appui manuel, qui peut être le bouton précité monté sur l'extrémité de pointage 4, appartenant à l'appareil de mesure ; et/ou
- via une instruction vocale donnée par l'opérateur, cette instruction vocale étant reconnue par l'unité de traitement et détectée via un microphone lui appartenant.

Dans un mode non revendiqué, l'instruction d'enregistrement peut être donnée via la détection d'un autre déplacement prédéterminé de l'extrémité de pointage.

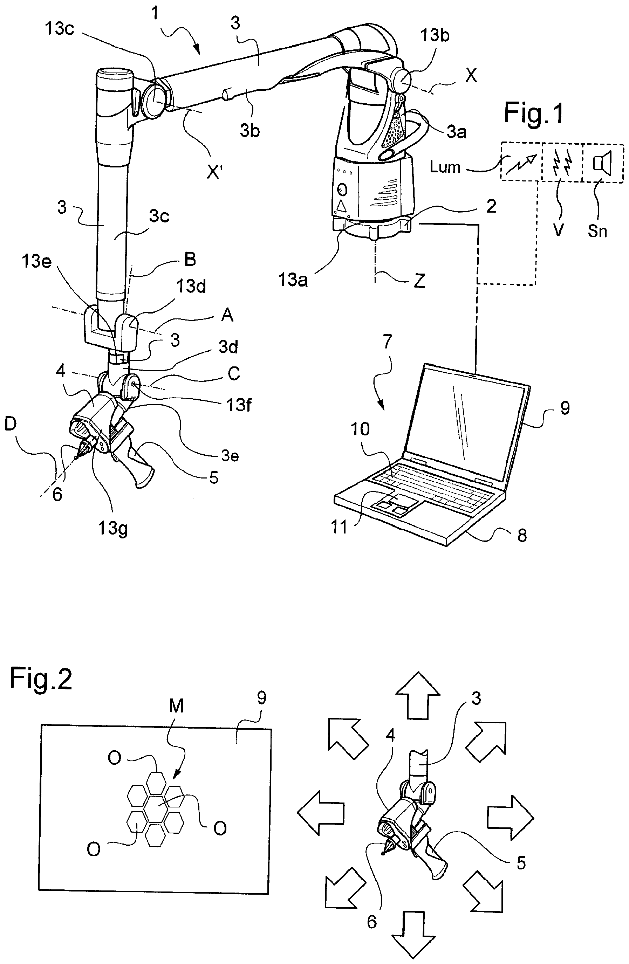

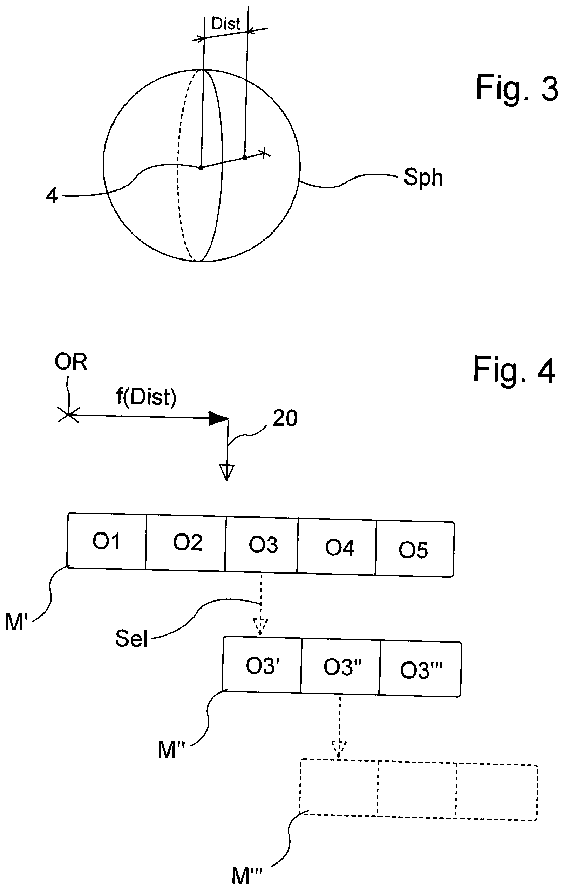

Comme on le voit sur les figures 2 et 4, l'une des instructions est un affichage d'un menu M ou M' sur l'écran 9 de l'unité de traitement 7. Chacun de ces menus présente une pluralité d'options O pour le menu de la figure 2 et O1, O2, O3, O4, O5 pour le menu de la figure 4. Le choix d'une option O est effectué dans le menu M par un déplacement prédéterminé de l'extrémité de pointage 4.

Dans le mode de réalisation ici décrit à la figure 2, les options O du menu M sont présentées selon un motif circulaire et le choix des options O est effectué en déplaçant l'extrémité de pointage 4 selon un rayon d'au moins un cercle imaginaire appartenant préférentiellement à une sphère imaginaire et dont le centre est occupé par l'extrémité de pointage 4.

Dans le mode de réalisation ici décrit aux figures 3 et 4, les options (O1, O2, O3, O4, O5) du menu M' sont présentées selon un motif en série dans lequel les options sont rangées les unes après les autres et le choix des options est effectué par l'unité de traitement en fonction du déplacement de l'extrémité de pointage 4 et plus particulièrement en fonction d'une distance d'éloignement évaluée de l'extrémité de pointage 4 par rapport à la position initiale de l'extrémité de pointage 4 qui a été enregistrée dans la mémoire à une étape précédente.

La valeur de l'éloignement Dist de l'extrémité de pointage 4 par rapport à sa position initiale enregistrée permet de commander le déplacement relatif d'un curseur de sélection 20 par rapport au menu M' pour choisir l'option du menu M' à motif série qui doit être présélectionnée et/ou sélectionnée.

Sur la figure 3 le repère 4 désigne l'emplacement de l'extrémité de pointage dans sa position initiale et la distance mesurée Dist représente la distance de déplacement de l'extrémité de pointage 4 mesurée en ligne droite entre cette position initiale et une position courante de l'extrémité de pointage. La croix dessinée sur la sphère imaginaire Sph centrée autour de la position initiale, symbolise la distance maximale de déplacement de l'extrémité 4 qui est prise en compte pour commander le déplacement du curseur de sélection 20 à la figure 4 par rapport au menu M'. Lorsque l'extrémité de pointage 4 est en position initiale, ce curseur de sélection 20 est dans une position d'origine OR par rapport au menu M' de la figure 4. Puis ce curseur 20 est déplacé par rapport aux options du menu M', ou inversement le menu M' est déplacé par rapport au curseur 20 selon une fonction de déplacement prédéterminée f(Dist). Une fois le curseur 20 positionné face à une option choisie, un retour d'information peut être envoyée à l'opérateur via l'un au moins des moyens d'information Lum, V, Sn, pour lui indiquer la nature de l'option choisie.

Ce mode de réalisation est particulièrement utile puisque l'opérateur peut choisir une option sans avoir à se préoccuper de savoir si la direction de déplacement de l'extrémité de pointage 4 est correcte ou non car seule la distance de déplacement Dist compte. De plus grâce à ce mode de réalisation, pour choisir une option du menu à motif en série M', l'opérateur n'a besoin que d'un degré de liberté de l'extrémité de pointage 4. Il arrive fréquemment que l'opérateur se trouvant dans un endroit difficile d'accès comme un châssis d'automobile dont on veut mesurer des cotes, soit dans l'impossibilité de choisir librement le sens de déplacement de l'extrémité de pointage 4. Grâce à ce mode de l'invention, l'opérateur peut sélectionner une option sans avoir une direction de déplacement qui lui soit imposée par un programme de l'unité de traitement. Ce mode augmente particulièrement l'ergonomie de commande de l'appareil de mesure.

Lorsque la distance d'éloignement de l'extrémité de pointage 4 par rapport à la position initiale dépasse une valeur d'éloignement prédéterminée alors une nouvelle position initiale est enregistrée à la place de la position initiale préalablement enregistrée.

Cette nouvelle position initiale remplace la position initiale préalablement enregistrée et la distance d'éloignement de l'extrémité de pointage 4 est alors évaluée par rapport à la nouvelle position initiale enregistrée.

En procédant ainsi, on détermine une sphère imaginaire Sph autour de la position initiale enregistrée et si l'utilisateur souhaite supprimer la première position initiale qui a été enregistrée et la remplacer par une nouvelle, il lui suffit d'éloigner l'extrémité de pointage d'une distance supérieure à la valeur d'éloignement prédéterminée, toujours sans se préoccuper de la direction de déplacement de l'extrémité 4.

Comme on le voit sur la figure 4, plusieurs menus et sous menus M', M", M"' sont agencés en cascade, et
chacun de ces menus présentant des options qui lui sont propre selon une série d'options consécutives. Lorsque l'option, ici O3 d'un menu M' est choisie par l'opérateur puis validée par une instructions de sélection Sel donnée par l'opérateur, par exemple :
- par appui sur un capteur; et/ou
- par commande vocale ; et/ou
- par détection d'un mouvement prédéterminé associé à une action de validation d'option;
un sous menu M'' peut alors être affiché.

A l'occasion de la sélection du sous menu M", le déplacement de l'extrémité de pointage 4 est alors associé à une sélection d'option O3', O3", O3''' appartenant à ce sous menu M".

La cascade de menu forme une arborescence de menus et sous menus accessibles simplement par déplacement de l'extrémité 4 et par sélection Sel, ce qui est avantageux car l'opérateur peut sélectionner simplement une option dans la cascade complexe de menus. Ce mode de réalisation ne présente aucune limitation dans le nombre de menus de la cascade.

On note qu'une instruction de dé-sélection pouvant être générée par l'un quelconque des moyens précités utilisés pour la sélection Sel peut être utilisée par l'opérateur. Une instruction de dé-sélection d'une option O3' permet à l'opérateur de revenir à l'option O3 du menu M' amont dont dépend le sous menu aval M" sélectionné dans la cascade.

Lorsque les options O sont disposées selon des motifs annulaires concentriques, comme c'est le cas dans le mode de réalisation illustré à la figure 2,la valeur du rayon permet de déterminer l'option sélectionnée.

On peut prévoir plusieurs menus associés à des déplacements différents. On peut prévoir un déplacement unique associé à l'affichage d'un menu contextuel dont le contenu change selon la phase d'exécution du programme informatique.

Au surplus, dans la mémoire de l'unité de traitement 7, ont été associés des informations traitables par l'unité de traitement 7 et des déplacements prédéterminés de l'extrémité de pointage 4.

Cette association est préférentiellement réalisée via une procédure d'apprentissage consistant à activer un mode apprentissage dans lequel on déplace l'extrémité de pointage 4 selon un déplacement choisi par l'opérateur et on affecte ce déplacement dans la mémoire de l'unité de traitement pour qu'il constitue un déplacement prédéterminé. Puis on associe à ce déplacement ainsi affecté une instruction exécutable par l'unité de traitement. Dans ce mode d'apprentissage on peut prévoir que l'opérateur détermine l'instruction exécutable via une programmation qu'il effectue et/ou qu'il associe l'instruction exécutable en la sélectionnant dans une liste d'instructions prédéterminées préalablement mémorisées dans la mémoire.

Dans ce mode d'apprentissage, on peut générer au moins un jeu de plusieurs déplacements prédéterminés chacun associé à une instruction exécutable particulière à l'un de ces déplacements prédéterminés.

On peut même prévoir de mémoriser plusieurs jeux de plusieurs déplacements prédéterminés, chaque jeu étant associé à un opérateur particulier. Ainsi, plusieurs opérateurs peuvent utiliser la même machine à mesurer cette machine s'adaptant à l'ergonomie souhaitée par chaque opérateur puisque chacun d'eux peut régler l'appareil de mesure selon sa propre gestuelle ou ses propres habitudes.

On peut aussi faire en sorte que plusieurs jeux correspondent à un même opérateur, le choix entre le jeu à utiliser étant réalisé automatiquement par l'unité de traitement 7 en fonction d'un état contextuel de l'appareil de mesure. Par exemple si l'opérateur choisi dans un menu une option donnée, l'unité de traitement peut alors commander le changement de jeu de commandes gestuelles, l'un des déplacements prédéterminés appartenant à ce nouveau jeu étant associé à une instruction exécutable spécifique de l'option choisie avec le précédent jeu.

Comme précédemment les données positionnelles arrivent en continu à l'unité de traitement 7 et sont vérifiées par l'unité de traitement à la recherche des déplacements correspondant à des instructions.

Lorsque l'unité de traitement 7 détecte le déplacement correspondant à l'ouverture d'un champ de saisie, l'unité de traitement 7 ouvre le champ de saisie et vérifie les données positionnelles à la recherche des déplacements correspondant à des informations.

Lorsque l'un des déplacements correspondant à une information est détectée, l'unité de traitement 7 associe l'information correspondante au champ de saisie ouvert.

Bien entendu, l'invention n'est pas limitée au mode de réalisation décrit mais englobe toute variante entrant dans le champ de l'invention telle que définie par les revendications.

En particulier, le bras de mesure peut avoir une structure différente de celle représentée et comprendre un portique ou un trépied.

En variante, la poignée peut être pourvue d'un ou plusieurs boutons de commande à chacun desquels sont associées une ou plusieurs fonctions.

On note que les moyens d'information Lum, V, Sn peuvent être commandés par l'unité de traitement pour qu'il donnent à l'opérateur un retour lui indiquant par exemple le démarrage de la machine à mesurer et/ou le déplacement de l'extrémité de pointage 4 et/ou la bonne exécution d'une commande associée comme l'enregistrement d'une nouvelle position initiale ou d'un nouveau point de mesure d'une pièce et/ou la sélection d'une option dans le menu. La combinaison des moyens d'information précités Lum, V, Sn, avec le mode de sélection dans un menu où les options sont en motif série, comme cela peut être le cas avec un menu déroulant M', M", M'" de la figure 4 est particulièrement simple d'utilisation pour l'utilisateur.

En effet, l'utilisateur peut déplacer l'extrémité de pointage dans une direction qu'il choisit librement et il est informé, par les moyens d'information, de l'option courante choisie en fonction de la distance Dist de ce déplacement par rapport à la position initiale. L'utilisateur peut ainsi commander l'appareil de mesure en aveugle, sans avoir à regarder l'écran et sans avoir à tenir compte de la direction de son déplacement.

Typiquement les informations transmises par les moyens d'informations sont codifiées pour que l'opérateur puisse comprendre des messages tels que :
- la position initiale de l'extrémité de pointage a été enregistrée ;
- l'option du menu qui est sélectionnée ou présélectionnée et en attente de validation de sélection par l'opérateur ;
- l'option a été sélectionnée ou dé-sélectionnée.

La sélection d'une option et/ou sa présélection et/ou sa dé-sélection sont des exemples d'instructions exécutables par l'unité de traitement, cette exécution ayant lieu lorsque le déplacement prédéterminé de l'extrémité de pointage 4 est détecté dans les données positionnelles.

Le terme présélection indique qu'une des options du menu a été choisie mais que l'opérateur doit confirmer ce choix via une sélection Sel pour que cette option choisie soit effectivement sélectionnée et exécutée. La confirmation peut être effectuée par appui sur un dispositif de détection d'appui manuel appartenant à l'appareil de mesure et/ou par une instruction vocale donnée par l'opérateur, cette instruction vocale étant détectée par l'unité de traitement via un microphone lui appartenant et/ou par la détection d'un autre déplacement prédéterminé de l'extrémité de pointage.

## Revendications

1. Procédé de commande d'un appareil de mesure comportant une unité de traitement (7) de données reliée à des moyens de repérage positionnel d'une extrémité de pointage (4) d'un bras de mesure (1), l'unité de traitement étant agencée pour traiter des données positionnelles en provenance des moyens de repérage positionnel, **caractérisé en ce qu'**il comprend les étapes de :
- associer, dans une mémoire de l'unité de traitement, une instruction exécutable par l'unité de traitement et un déplacement prédéterminé de l'extrémité de pointage,
- vérifier une présence du déplacement prédéterminé dans les données positionnelles provenant des moyens de repérage positionnel,
- faire exécuter l'instruction par l'unité de traitement lorsque le déplacement prédéterminé de l'extrémité de pointage est détecté dans les données positionnelles ;
l'extrémité de pointage (4) comportant une poignée de manipulation (5) et l'unité de traitement (7) comportant en outre un écran (9) et des moyens d'information (Lum, V, Sn) autres que l'écran (9), ces moyens d'information étant agencés pour transmettre une information à un opérateur de l'appareil de mesure tenant dans une main la poignée de manipulation (5), le procédé de commande comprenant l'enregistrement d'une position initiale de l'extrémité de pointage à réception d'une instruction d'enregistrement donnée par l'utilisateur, les moyens d'information étant en outre agencés pour transmettre à l'opérateur un premier signal l'informant que la position initiale de l'extrémité de pointage a été enregistrée, ladite vérification de présence du déplacement étant réalisée en observant le déplacement de l'extrémité de pointage (4) depuis cette position initiale enregistrée.

2. Procédé selon la revendication 1, dans lequel l'instruction d'enregistrement donnée par l'utilisateur est donnée par une action de l'utilisateur comprise dans le groupe d'action comprenant un appui sur un dispositif de détection d'appui manuel appartenant à l'appareil de mesure, une instruction vocale donnée par l'opérateur, cette instruction vocale étant détectée par l'unité de traitement via un microphone lui appartenant.

3. Procédé selon l'une quelconque des revendications 1 ou 2, dans lequel les moyens d'information comportent au moins l'un des moyens d'information appartenant au groupe comprenant :
- un générateur de vibrations (V) préférentiellement adapté à générer des vibrations au niveau de la poignée (5) ;
- un générateur de signaux lumineux (Lum) tel qu'une lampe à éclat, ce générateur pouvant être disposée sur l'extrémité de pointage (4) pour être visible par l'opérateur la manipulant ;
- un générateur de signaux sonores (Sn) par exemple adapté à émettre un message vocal comprenant des paroles.

4. Procédé selon l'une quelconque des revendications 1 à 3 dans lequel :
- le bras de mesure comprend une embase (2) et plusieurs segments (3a, 3b, 3c, 3d) de bras (3), ces segments de bras (3) étant articulés les uns par rapport aux autres par des articulations (X, X', A, B, C), l'embase (2) étant articulée à un premier de ces segments (3a) par une première articulation (Z), et l'extrémité de pointage (4) étant articulée à une première extrémité d'un dernier de ces segments (3e) par une dernière articulation (D) ;
- les moyens de repérage positionnel comprenant :
- un premier de ces détecteurs (13a) détectant la position angulaire relative de l'embase (2) par rapport audit premier segment (3a) ;
- un dernier de ces détecteurs (13g) détectant la position angulaire relative de l'extrémité de pointage (4) par rapport audit dernier segment (3e) auquel il est articulé ; et
- certains autres des détecteurs de position angulaire formant des détecteurs intermédiaires (13b, 13c, 13d, 13e, 13f) chacun de ces détecteurs intermédiaires étant associé à deux segments articulés l'un par rapport à l'autre et correspondants à ce détecteur intermédiaire de manière à mesurer une position angulaire relative des segments auxquels il est associé ;
les données positionnelles étant déterminées en fonction d'au moins trois des positions angulaires relatives mesurées par lesdits détecteurs de position angulaire.

5. Procédé selon la revendication 5, dans lequel le déplacement prédéterminé de l'extrémité de pointage est exprimé en fonction de données positionnell venant de tous les détecteurs de position angulaire de l'appareil de mesure.

6. Procédé selon l'une quelconque des revendications 1 à 5, comprenant les étapes de :
- associer, dans une mémoire de l'unité de traitement (7), une information traitable par l'unité de traitement et un déplacement prédéterminé de l'extrémité de pointage (4),
- vérifier une présence du déplacement prédéterminé dans les données positionnelles provenant des moyens de repérage positionnel,
- faire acquérir l'information par l'unité de traitement lorsque le déplacement prédéterminé de l'extrémité de pointage est détecté dans les données positionnelles.

7. Procédé selon l'une quelconque des revendications 1 à 5, dans lequel l'une des instructions est un affichage d'un menu (M, M') sur un écran (9) de l'unité de traitement (7).

8. Procédé selon la revendication 7, dans lequel un choix d'option (O, O1, O2, O3, O4, O5) est effectué dans le menu (M, M') par un déplacement de l'extrémité de pointage (4).

9. Procédé selon la revendication 8, dans lequel les options (O) du menu (M) sont présentées selon un motif circulaire et le choix des options est effectué en déplaçant l'extrémité de pointage (4) selon un rayon d'un cercle imaginaire dont le centre est occupé par l'extrémité de pointage (4).

10. Procédé selon les revendications 1 et 8 combinées, dans lequel les options (O1, O2, O3, O4, O5) du menu (M') sont présentées selon un motif en série dans lequel les options sont rangées les unes après les autres et le choix des options est effectué en déplaçant l'extrémité de pointage (4) et en évaluant la distance d'éloignement de l'extrémité de pointage (4) par rapport à la position initiale de l'extrémité de pointage (4) qui a été enregistrée.

11. Procédé selon la revendication 10, dans lequel lorsque la distance d'éloignement de l'extrémité de pointage (4) par rapport à la position initiale dépasse une valeur d'éloignement prédéterminée alors une nouvelle position initiale est enregistrée à la place de la position initiale préalablement enregistrée.

12. Procédé selon la revendication 3 combinée à l'une quelconque des revendications 11 à 13, dans lequel l'un au moins desdits moyens information (Lum, V, Sn) est commandé par l'unité de traitement pour indiquer à l'utilisateur l'option du menu qui est choisie, l'utilisateur pouvant ainsi commander l'appareil de mesure en aveugle sans avoir à regarder l'écran (9).

## Patentansprüche

1. Verfahren zum Steuern eines Messgeräts, umfassend eine Datenverarbeitungseinheit (7), die mit Positionsbestimmungsmitteln zur Positionsbestimmung eines Zielendes (4) eines Messarms (1) verbunden ist, wobei die Verarbeitungseinheit derart ausgebildet ist, dass sie aus den Positionsbestimmungsmitteln stammende Positionsdaten verarbeitet, **dadurch gekennzeichnet, dass** es die Schritte umfasst:
- Verknüpfen einer von der Verarbeitungseinheit ausführbaren Anweisung und einer vorbestimmten Verschiebung des Zielendes in einem Speicher der Verarbeitungseinheit,
- Verifizieren eines Vorhandenseins der vorbestimmten Verschiebung in den aus den Positionsbestimmungsmitteln stammenden Positionsdaten,
- Ausführen der Anweisung durch die Verarbeitungseinheit, wenn die vorbestimmte Verschiebung des Zielendes in den Positionsdaten erfasst wird;
wobei das Zielende (4) einen Handhabungsgriff (5) umfasst und die Verarbeitungseinheit (7) ferner einen Bildschirm (9) und andere Informationsmittel (Lum, V, Sn) als den Bildschirm (9) umfasst, wobei diese Informationsmittel derart ausgebildet sind, dass sie eine Information an eine Bedienperson des Messgeräts übertragen, die den Handhabungsgriff (5) in der Hand hält, wobei das Steuerverfahren das Speichern einer Anfangsposition des Zielendes nach Empfang einer von der Bedienperson erteilten Speicheranweisung umfasst, wobei die Informationsmittel ferner derart ausgebildet sind, dass sie an die Bedienperson ein erstes Signal übertragen, das diese informiert, dass die Anfangsposition des Zielendes gespeichert wurde, wobei die genannte Verifizierung des Vorhandenseins der Verschiebung dadurch erfolgt, dass die Verschiebung des Zielendes (4) von dieser gespeicherten Anfangsposition ab beobachtet wird.

2. Verfahren nach Anspruch 1, bei dem die von der Bedienperson erteilte Speicheranweisung durch eine Handlung der Bedienperson gegeben wird, die in der Gruppe von Handlungen enthalten ist, die ein Drücken auf eine zum Messgerät gehörige Vorrichtung zum Erfassen eines manuellen Drückens, eine von der Bedienperson gegebene Sprachanweisung, wobei diese Sprachanweisung von der Verarbeitungseinheit über ein zu ihr gehöriges Mikrophon erfasst wird, umfasst.

3. Verfahren nach einem der Ansprüche 1 oder 2, bei dem die Informationsmittel mindestens eines der Informationsmittel umfassen, die zur Gruppe gehören, die umfasst:
- einen Vibrationserzeuger (V), der vorzugsweise geeignet ist, Vibrationen im Bereich des Griffs (5) zu erzeugen;
- einen Erzeuger von Lichtsignalen (Lum), wie z. B. eine Blitzlampe, wobei dieser Erzeuger an dem Zielende (4) positioniert werden kann, um von der Bedienperson, die es handhabt, gesehen zu werden;
- ein Erzeuger von Tonsignalen (Sn), der beispielsweise angepasst ist, um eine Worte umfassende Sprachnachricht auszusenden.

4. Verfahren nach einem der Ansprüche 1 bis 3, bei dem:
- der Messarm eine Basis (2) und mehrere Segmente (3a, 3b, 3c, 3d) des Arms (3) umfasst, wobei diese Segmente des Arms (3) relativ zueinander über Gelenkverbindungen (X, X', A, B, C) angelenkt sind, wobei die Basis (2) an einem ersten Segment (3a) dieser Segmente über eine erste Gelenkverbindung (Z) angelenkt ist, und das Zielende (4) an einem ersten Ende eines letzten Segments (3e) dieser Segmente über eine letzte Gelenkverbindung (D) angelenkt ist;
- wobei die Positionsbestimmungsmittel umfassen:
- einen ersten (13a) dieser Detektoren, der die relative Winkelposition der Basis (2) in Bezug auf das genannte erste Segment (3a) erfasst;
- einen letzten (13g) dieser Detektoren, der die relative Winkelposition des Zielendes (4) in Bezug auf das genannte letzte Segment (3e) umfasst, an dem es angelenkt ist; und
- einige andere dieser Winkelpositionsdetektoren, die Zwischendetektoren (13b, 13c, 13d, 13e, 13f) bilden, wobei jeder dieser Zwischendetektoren mit zwei Segmenten verbunden ist, die aneinander angelenkt sind und diesem Zwischendetektor entsprechen, derart, dass eine relative Winkelposition der Segmente gemessen wird, mit denen dieser verbunden ist;
wobei die Positionsdaten abhängig von mindestens drei der relativen Winkelpositionen bestimmt werden, die von den genannten Winkelpositionsdetektoren gemessen werden.

5. Verfahren nach Anspruch 5, bei dem die vorbestimmte Verschiebung des Zielendes abhängig von Positionsdaten ausgedrückt wird, die von allen Winkelpositionsdetektoren des Messgeräts kommen.

6. Verfahren nach einem der Ansprüche 1 bis 5, umfassend die Schritte:
- Verknüpfen einer von der Verarbeitungseinheit verarbeitbaren Information und einer vorbestimmten Verschiebung des Zielendes (4) in einem Speicher der Verarbeitungseinheit (7),
- Verifizieren eines Vorhandenseins der vorbestimmten Verschiebung in den aus den Positionsbestimmungsmitteln stammenden Positionsdaten,
- Erfassen der Information durch die Verarbeitungseinheit, wenn die vorbestimmte Verschiebung des Zielendes in den Positionsdaten erfasst wird.

7. Verfahren nach einem der Ansprüche 1 bis 5, bei dem eine der Anweisungen eine Anzeige eines Menus (M, M') auf einem Bildschirm (9) der Verarbeitungseinheit (7) ist.

8. Verfahren nach Anspruch 7, bei dem eine Optionsauswahl (O, O1, O2, O3, O4, O5) in dem Menu (M, M') durch eine Verschiebung des Zielendes (4) erfolgt.

9. Verfahren nach Anspruch 8, bei dem die Optionen (O) des Menus (M) gemäß einem kreisförmigen Motiv dargestellt sind und die Auswahl der Optionen dadurch erfolgt, dass das Zielende (4) gemäß einem Radius eines imaginären Kreises verschoben wird, dessen Mitte von dem Zielende (4) eingenommen ist.

10. Verfahren nach den Ansprüchen 1 und 8 in Kombination, bei dem die Optionen (O, O1, O2, O3, O4, O5) des Menus (M') gemäß einem Serienmotiv dargestellt sind, in dem die Optionen nacheinander geordnet sind, und die Wahl der Optionen dadurch erfolgt, dass das Zielende (4) verschoben und der Entfernungsabstand des Zielendes (4) in Bezug auf die Anfangsposition des Zielendes (4), die gespeichert worden ist, ermittelt wird.

11. Verfahren nach Anspruch 10, bei dem, wenn der Entfernungsabstand des Zielendes (4) in Bezug auf die Anfangsposition einen vorbestimmten Entfernungswert übersteigt, dann eine neue Anfangsposition anstelle der zuvor gespeicherten Anfangsposition gespeichert wird.

12. Verfahren nach Anspruch 3 in Kombination mit einem der Ansprüche 11 bis 13, bei dem mindestens eines der genannten Informationsmittel (Lum, V, Sn) von der Verarbeitungseinheit gesteuert wird, um der Bedienperson die gewählte Option des Menus anzuzeigen, wobei die Bedienperson folglich das Messgerät blindlings steuern kann, ohne auf den Bildschirm (9) schauen zu müssen.

## Claims

1. Method of controlling a measuring device including a data processing unit (7) connected to means for positionally locating a pointing end (4) of a measuring arm (1), the processing unit being adapted to process positional data from the positional locating means, **characterized in that** it comprises the steps of:
- associating, in a memory of the processing unit, an instruction executable by the processing unit and a predetermined movement of the pointing end;
- verifying presence of the predetermined movement in the positional data from the positional locating means;
- executing the instruction by the processing unit when the predetermined movement of the pointing end is detected in the positional data;
the pointing end (4) including a manipulating handle (5) and the processing unit (7) further including a screen (9) and information means (Lum, V, Sn) other than the screen (9), these information means being adapted to transmit information to an operator of the measuring device holding the manipulating handle (5) in one hand, the control method including recording an initial position of the pointing end on receiving an instruction to record given by the user, the information means being moreover adapted to transmit to the operator a first signal informing them that an initial position of the pointing end has been recorded, said movement presence verification being carried out by observing the movement of the pointing end (4) from this recorded initial position.

2. Method according to claim 1, wherein the recording instruction given by the user is given by an action of the user included in the group of actions comprising pressing on a manual pressing detecting device belonging to the measuring device, a voice instruction given by the operator, this voice instruction being detected by the processing unit via a microphone belonging to it.

3. Method according to either one of claims 1 or 2, wherein the information means include at least one of the information means belonging to the group comprising:
- a vibration generator (V) preferably adapted to generate vibrations at the level of the handle (5);
- a light signal generator (Lum) such as a flash lamp, this generator being able to be placed on the pointing end (4) so as to be visible to the operator manipulating it;
- a sound signal generator (Sn) for example adapted to transmit a voice message comprising words.

4. Method according to any one of claims 1 to 3 wherein:
- the measuring arm comprises a base (2) and a plurality of segments (3a, 3b, 3c, 3d) of arms (3), these arm segments (3) being articulated to one another by articulations (X, X', A, B, C), the base (2) being articulated to a first of these segments (3a) by a first articulation (Z) and the pointing end (4) being articulated at a first end of a last of these segments (3e) by a last articulation (D);
- the positional locating means comprising:
- a first of these detectors (13a) detecting the relative angular position of the base (2) with respect to said first segment (3a);
- a last of these detectors (13g) detecting the relative angular position of the pointing end (4) with respect to said last segment (3e) to which it is articulated; and
- some others of the angular position detectors forming intermediate detectors (13b, 13c, 13d, 13e, 13f), each of these intermediate detectors being associated with two segments articulated with respect to one another and corresponding to this intermediate detector in order to measure a relative angular position of the segments with which it is associated;
the positional data being determined as a function of at least three of the relative angular positions measured by said angular position detectors.

5. Method according to claim 5, wherein the predetermined movement of the pointing end is expressed as a function of positional data from all the angular position detectors of the measuring device.

6. Method according to any one of claims 1 to 5, comprising the steps of:
- associating, in a memory of the processing unit (7), information that can be processed by the processing unit and a predetermined movement of the pointing end (4);
- verifying a presence of the predetermined movement in the positional data from the positional locating means,
- acquiring the information by the processing unit when the predetermined movement of the pointing end is detected in the positional data.

7. Method according to any one of claims 1 to 5, wherein one of the instructions is to display a menu (M, M') on a screen (9) of the processing unit (7).

8. Method according to claim 7, wherein an option choice (O, O1, O2, O3, O4, O5) is made in the menu (M, M') by a movement of the pointing end (4).

9. Method according to claim 8, wherein the options (O) of the menu (M) are presented in a circular pattern and the choice of options is made by moving the pointing end (4) along a radius of an imaginary circle the centre of which is occupied by the pointing end (4).

10. Method according to claims 1 and 8 combined, wherein the options (O1, O2, O3, O4, O5) of the menu (M') are presented in a series pattern in which the options are arranged one after the other and the choice of options is made by moving the pointing end (4) and evaluating the distance of the pointing end (4) from the recorded initial position of the pointing end (4).

11. Method according to claim 10, wherein when the distance of the pointing end (4) from the initial position exceeds a predetermined distance value then a new initial position is recorded instead of the initial position previously recorded.

12. Method according to claim 3 combined with any one of claims 11 to 13, wherein at least one of said information means (Lum, V, Sn) is controlled by the processing unit to indicate to the user the menu option that is chosen, the user thus being able to control the measuring device blind without having to look at the screen (9).
